# EUROPÄISCHE PATENTSCHRIFT

(11) **EP 1 266 137 B1**
(45) Veröffentlichungstag und Bekanntmachung des Hinweises auf die Patenterteilung: **11.08.2004**
(21) Anmeldenummer: 01907550.6
(22) Anmeldetag: 22.02.2001
(51) Int. Cl.: F03D 3/06, F03D 7/02, F16C 19/18, F16C 19/54

(54) **LAGERUNG EINES VERSTELLBAREN ROTORBLATTS EINER WINDENERGIEANLAGE**
BEARING FOR AN ADJUSTABLE ROTOR BLADE ON A WIND ENERGY PLANT
PALIER POUR UNE PALE DE ROTOR REGLABLE D'UNE EOLIENNE

(30) Priorität: 10.03.2000 DE 10011464
(43) Veröffentlichungstag der Anmeldung: 18.12.2002
(73) Patentinhaber: Wobben, Aloys, 26607 Aurich (DE)
(72) Erfinder: Wobben, Aloys, 26607 Aurich (DE)
(74) Vertreter: Eisenführ, Speiser & Partner
(86) Internationale Anmeldenummer: PCT/EP2001/002008
(87) Internationale Veröffentlichungsnummer: WO 2001/069081

(56) Entgegenhaltungen:
- DE-A- 2 552 526
- DE-A- 4 432 986
- DE-B- 1 129 117
- GB-A- 1 069 009
- US-A- 2 488 825
- US-A- 4 126 361

## Beschreibung

Die Erfindung betrifft die Lagerung eines verstellbaren Rotorblattes an der Rotornabe einer Windenergieanlage mit einem Wälzlager für die Übertragung hoher Axialkräfte und großer Biegemomente bei geringen Relativbewegungen zwischen den Lagerpartnern in einem Stellantrieb-Schwenklager zwischen der Rotornabe und einem Rotorblatt einer Windenergieanlage.

Eine kugelgelagerte Drehverbindung ist für Bagger, Drehkräne o. dgl. aus der DE 27 52 487 B1 bekannt. Der Vorteil von Wälzlagern liegt bekanntlich im geringen (Reibungs-)Widerstand, den sie der Relativbewegung zwischen den Lagerpartnern entgegensetzen. Das gilt auch und gerade für Schwenklager, wie sie beispielsweise in Stellantrieben Verwendung finden, weil dort im Gegensatz zu Gleitlagern nicht bei jeder Schwenkbewegung aus der Ruhelage der - gegenüber der Gleitreibung höhere - Haftreibungs-Widerstand überwunden werden muss. Andererseits reagiert ein Vielpunktlager wesentlich empfindlicher als ein Gleitlager auf hohe Axialkräfte und insbesondere große Biegemomente. Besonders gravierend wird deren Einfluss dann, wenn das Wälzlager einen großen Durchmesser haben muss und die Biegemomente zu einer radialen Relativverschiebung der Lagerringe führen. So verändert sich bei einem Kugellager, ausgehend von einer Schmiegung von 6% (Abweichung des Laufrillendurchmessers vom Kugeldurchmesser) der Kugel-Druckwinkel in der Laufrille von 45° auf 85°, wenn sich die Lagerringe um 0,56 mm radial gegeneinander verschieben; die Kugeln rollen also nur noch auf den Kanten der Lagerringe ab.

Die Veränderung des Anstellwinkels (Pitchwinkels) der Rotorblätter einer Windenergieanlage gegenüber deren Rotornabe stellt einen solchen Stellantrieb dar; bekanntlich muss dieser Pitchwinkel aus Effizienz- und Sicherheitsgründen jeweils in Abhängigkeit von derWindgeschwindigkeit während der Rotordrehung verändert werden. Aus der DE 196 34 059 ist eine Rotorblatt-Lagerung für ein hohles Rotorblatt bekannt, die aus zwei in Achsrichtung versetzten Kugellagern gleichen Durchmessers besteht, wobei die gemeinsame Teilungsfuge konzentrisch zur Drehachse verläuft, so dass Radialkräfte gut, Axialkräfte aber nur begrenzt aufgenommen werden können. Im Betrieb ist jedoch jedes Rotorblatt erheblichen Kräften in Richtung seiner Längsachse - um die das Rotorblatt beim Verstellen des Pitchwinkels geschwenkt wird - und außerdem erheblichen Biegemomenten ausgesetzt, denen die Schwenklagerung des Rotorblattes an der Rotornabe ungeachtet häufiger Schwenkbewegungen widerstehen muss.

Der Erfindung liegt die Aufgabe zugrunde, eine Rotorblatt-Lagerung anzugeben, die diese Forderung erfüllt.

Die Lösung dieser Aufgabe besteht, ausgehend von der eingangs geschilderten Anordnung, in einem Wälzlager mit einem zwei radial zueinander versetzte Reihen von Wälzkörpern formschlüssig aufnehmenden Lagerring für den einen Lagerpartner und einem diese im Querschnitt U-förmig umgreifenden Lagerring für den anderen Lagerpartner, wobei der Lagerring für das den anderen Lagerpartner bildende Rotorblatt aus zwei Ringen mit unterschiedlichen Durchmessern besteht, die unabhängig voneinander am Rotorblatt befestigt sind. Auf diese Weise entsteht einerseits ein praktisch dreiringiges Wälzlager, dessen am anderen Lagerpartner befestigter Mittelring beim Auftreten von Biegemomenten (und Axialkräften) von den beiden Aussenringen (bzw. Ringabschnitten des umgreifenden Lagerrings) Druckkräfte in mehr oder weniger senkrecht zueinander verlaufenden Richtungen erhält und sich dadurch selbsttätig symmetriert, die Druckkräfte also jeweils im Mittelbereich der Lagerrillen-Quadranten bleiben, andererseits werden die Kräfte aus dem Rotorblatt gleichzeitig in die beiden Außenringe (bzw. Ringabschnitte) eingeleitet und somit eine gleichmäßigere Belastung der Lagerung sowie der Rotorblatt-Wurzel erzielt. Die Bildung des umgreifenden Lagerrings aus zwei Außenringen und einem diese verbindenden Kreisring ist aus der EP 0 158 015 A2 bekannt.

Vorzugsweise ist die kreisförmige Wurzel des hohlen Rotorblattes in zwei Teilschalen gegabelt und jede Teilschale ist an einem der beiden Ringe des einen Lagerrings befestigt. Die beiden Reihen von Wälzkörpern sind insbesondere konzentrisch zueinander angeordnet. Es ist jedoch auch möglich, sie axial zu versetzen.

Zusätzliche Weiterbildungen ergeben sich aus der nachfolgenden Beschreibung eines Ausführungsbeispiels und sind Gegenstand weiterer Unteransprüche. Die Zeichnung veranschaulicht das Ausführungsbeispiel, darin zeigt:
- Fig. 1: in teilweise geschnittener Ansicht die Schwenklagerung eines Rotorblattes einer Windenergieanlage am Blattstutzen der Rotornabe;
- Fig. 2: in stark vergrößertem Schnitt die Wälzlager-Ausbildung des Schwenklagers in Fig. 1; und
- Fig. 3: eine schematische Darstellung der Kraftverhältnisse im Wälzlager der Fig. 2.

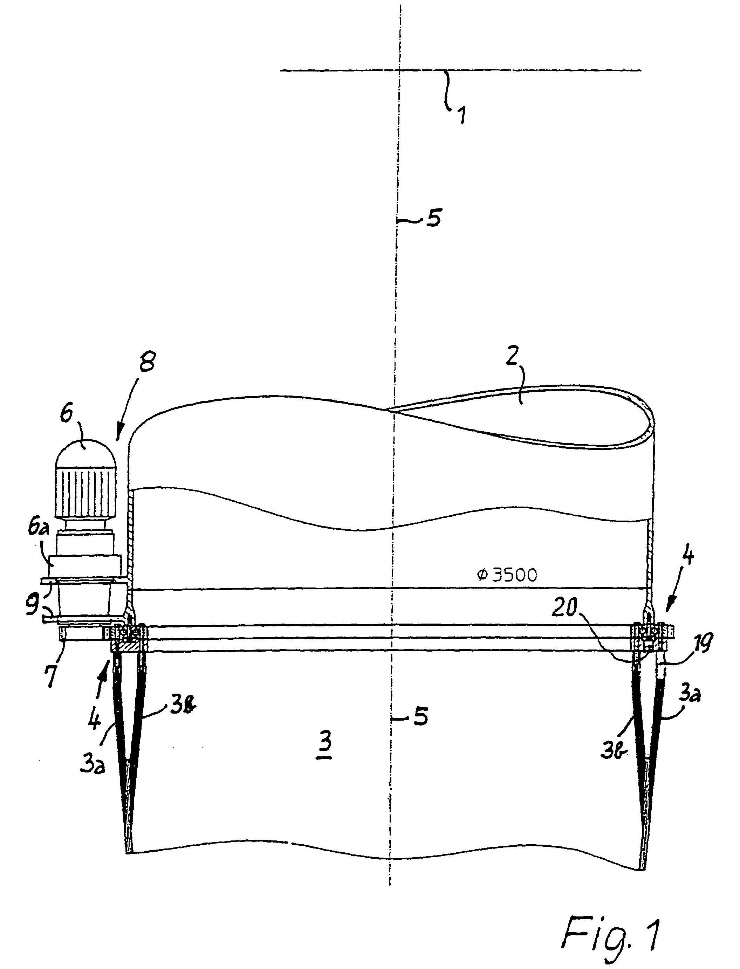

Um die in Fig. 1 strichpunktiert angegebene horizontale Rotorachse 1 ist die nicht weiter dargestellte Rotornabe einer Windenergieanlage an der Spitze eines sie tragenden - ebenfalls nicht dargestellten - Mastes drehbar gelagert. Dargestellt ist lediglich der radial äussere Teil eines Rotorblatt-Nabenstutzens 2, von denen mehrere am zentralen Teil der Nabe - über deren Umfang gleichmäßig verteilt - angebracht sind. Der (sich mit der Rotornabe um die Rotorachse 1 drehende) Rotorblatt-Nabenstutzen 2 ist im wesentlichen rohrförmig mit einem der kreisförmigen "Wurzel" des Rotorblatts 3 entsprechenden Durchmesser von im Beispiel 3,5 m. Am Nabenstutzen 2 ist das Rotorblatt 3 mit Hilfe des Lagers 4 um die Rotorblatt-Längsachse 5 schwenkbar gelagert. Der äussere Lagerring 10 des Lagers 4 trägt eine Aussenverzahnung 11, in die das von einem Elektromotor 6 angetriebene Ritzel 7 eines im Ganzen mit 8 bezeichneten Stellantriebs (für die Verstellung des Rotorblatt-Pitchwinkels) eingreift. Der Motor 6 (nebst Getriebe 6a) ist an einer mit dem Nabenstutzen 2 fest verbundenen Halterung 9 befestigt.

Das Lager 4 hat einen zweiten Lagerring 1 2 und einen zwischen den Lagerringen 10, 12 angeordneten dritten Lagerring 13. Zwischen den Lagerringen 10 und 13 einerseits sowie zwischen den Lagerringen 12 und 13 andererseits sind Reihen von Kugeln 14 angeordnet. Der mittlere Lagerring 13 ist mittels der Schrauben 15 mit den Nabenstutzen 2 verschraubt. Die Lagerringe 10 und 12 sind (in Umfangsrichtung immer abwechselnd) teils mit einem das hohle Rotorblatt 3 abschließenden Blattring in Form eines Kreisringes 16, teils - durch den Kreisring 16 hindurch - unmittelbar mit dem Rotorblatt 3 selbst verschraubt (Schrauben 17 bzw. 18). Fig. 1 macht deutlich, wie die beiden Teilschalen 3a und 3b des Rotorblattes 3 zum einschaligen Rotorblatt zusammenlaufen. Die Zugriffsöffnung 19 in Verbindung mit einer Bohrung 20 im Kreisring 16 erlaubt den Zugang zu den Schrauben 15 des Lagerrings 13 zwecks Montage und Demontage des jeweiligen Rotorblattes 3.

Der Kreisring 16, der in der vorstehend beschriebenen Weise sowohl an der Teilschale 3a als auch der Teilschale 3b des Rotorblattes 3 befestigt ist, stellt eine starre Überbrückung zwischen den Lagerringen 10 und 12 dar, so dass diese Kombination einheitlich als ein Lagerring des Wälzlagers 4 angesehen werden kann.

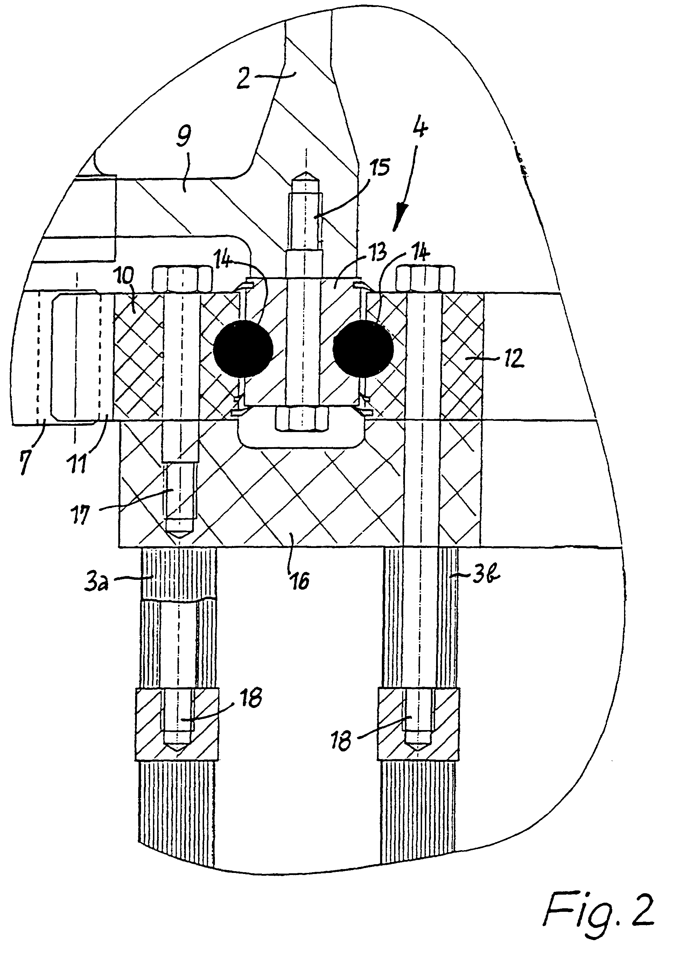

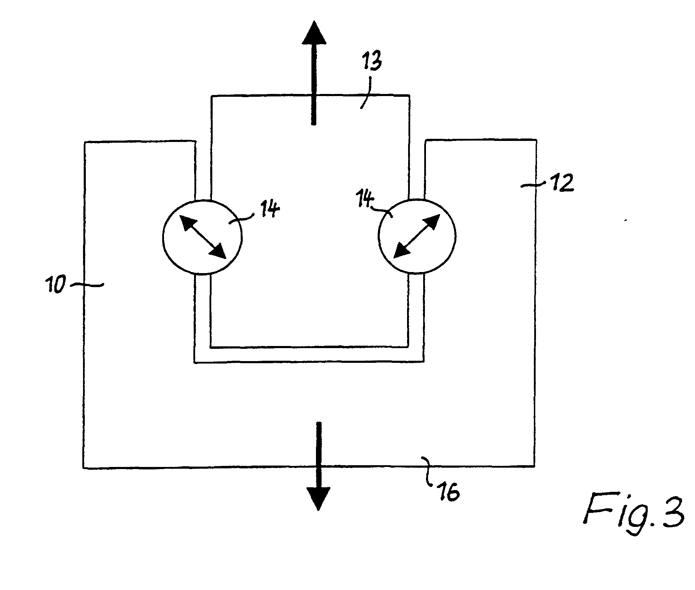

Fig. 3 veranschaulicht schematisch die im Betrieb des in den Fig. 1 und 2 dargestellten Schwenklagers 4 für die Pitchwinkel-Verstellung eines Rotorblatts 3 auftretenden Kräfte. Infolge der symmetrischen Kraftein- und -durchleitung in den Kugeln 14 der beiden Reihen des Kugellagers ergeben sich parallel zur Rotorblattachse 5 verlaufende Kraftpfeile für die Beanspruchung des Kreisrings 16 (mit den - mit diesen als Einheit dargestellten - Lagerringen 10, 12) und den Lagerring 13.

## Patentansprüche

1. Stellantrieb-Schwenklagerung eines verstellbaren Rotorblattes an der Rotornabe einer Windenergieanlage mit einem Wälzlager für die Übertragung hoher Axialkräfte und großer Biegemomente bei geringen Relativbewegungen zwischen den Lagerpartnern, mit einem zwei radial zueinander versetzte Reihen von Wälzkörpern formschlüssig aufnehmenden Lagerring für den einen Lagerpartner und einem diese im Querschnitt U-förmig umgreifenden Lagerring für den anderen Lagerpartner, wobei der Lagerring für das den anderen Lagerpartner bildende Rotorblatt aus zwei Ringen (10, 12) mit unterschiedlichen Durchmessern besteht, die unabhängig voneinander am Rotorblatt (3) befestigt sind.

2. Lagerung nach Anspruch 1,
**dadurch gekennzeichnet, dass** die kreisförmige Wurzel des hohlen Rotorblattes (3) in zwei Teilschalen (3a, 3b) gegabelt und jede Teilschale an einem der beiden Ringe (10, 12) des einen Lagerrings befestigt ist.

3. Lagerung nach Anspruch 1 oder 2,
**dadurch gekennzeichnet, dass** die beiden Reihen von Wälzkörpern konzentrisch zueinander angeordnet sind.

4. Lagerung nach einem der Ansprüche 1 bis 3,
**dadurch gekennzeichnet, dass** die beiden Ringe (10, 12) des einen Lagerrings durch einen Kreisring (16) überbrückt sind und jeder Ring (10, 12) über seinen Umfang abwechselnd mit dem Kreisring (16) und - durch diesen hindurch - mit dem zugehörigen Lagerpartner (Rotorblatt 3) verbunden ist.

5. Lagerung nach einem der Ansprüche 1 bis 4,
**dadurch gekennzeichnet, dass** die Wälzkörper Kugeln (14) sind.

## Claims

1. Actuating drive pivoting bearing for a variable-pitch rotor blade on the rotor hub of a wind energy system having a roller bearing for the transmission of high axial forces and large bending moments with small relative movements between the bearing partners, having a ring bearing which holds two rows of roller bodies, which are offset radially with respect to one another, in an interlocking manner for one bearing partner and having a ring bearing, which surrounds this with a U-shaped cross section, for the other bearing partner, with the ring bearing for the rotor blade which forms the other bearing partner comprising two rings (10, 12) with different diameters, which are attached to the rotor blade (3) independently of one another.

2. Bearing according to Claim 1,
**characterized in that** the circular root of the hollow rotor blade (3) is split in the form of a fork into two shell elements (3a, 3b), and each shell element is attached to one of the two rings (10, 12) of the first ring bearing.

3. Bearing according to Claim 1 or 2,
**characterized in that** the two rows of roller bodies are arranged concentrically with respect to one another.

4. Bearing according to one of Claims 1 to 3,
**characterized in that** the two rings (10, 12) of the first ring bearing are bridged by a circular ring (16), and each ring (10, 12) is connected via its circumference alternately to the circular ring (16) and, passing through this, to the associated bearing partner (rotor blade 3).

5. Bearing according to one of Claims 1 to 4,
**characterized in that** the roller bodies are balls (14).

## Revendications

1. Palier pivotant de servomoteur pour une pale de rotor réglable d'un moyeu de rotor d'une éolienne avec un roulement pour la transmission d'efforts axiaux importants et de forts couples de flexion sous un faible mouvement relatif entre les roulements associés, avec une bague de roulement pour l'un des roulements associés incluant en complémentarité de forme deux rangées d'éléments de roulement décalés dans le sens radial entre elles et avec une bague de roulement pour l'autre roulement associé les entourant en forme de U sur leur section, la bague de roulement pour la pale de rotor qui forme l'autre roulement associé se composant de deux bagues (10, 12) de diamètres différents, qui sont fixées indépendamment l'une de l'autre sur la pale de rotor (3).

2. Palier selon la revendication 1, **caractérisé en ce que** la racine de forme circulaire de la pale de rotor creuse (3) bifurque pour former deux coquilles partielles (3a, 3b) et que chaque coquille partielle est fixée sur l'une des deux bagues (10, 12) de l'une des bagues de roulement.

3. Palier selon la revendication 1 ou 2, **caractérisé en ce que** les deux rangées d'éléments de roulement sont disposées de manière concentrique l'une par rapport à l'autre.

4. Palier selon l'une quelconque des revendications 1 à 3, **caractérisé en ce que** les deux bagues (10, 12) de l'une des bagues de roulement sont shuntées par une bague circulaire (16) et que chaque bague (10, 12) est reliée sur son pourtour en alternance avec une bague circulaire (16) et -à travers celle-ci- avec le roulement associé correspondant (pale de rotor 3).

5. Palier selon l'une quelconque des revendications 1 à 4, **caractérisé en ce que** les éléments de roulement sont des billes (14).
